# EUROPÄISCHE PATENTSCHRIFT

(11) **EP 3 792 720 B1**
(45) Veröffentlichungstag und Bekanntmachung des Hinweises auf die Patenterteilung: **23.02.2022**
(21) Anmeldenummer: 20195626.5
(22) Anmeldetag: 11.09.2020
(51) Int. Cl.: G05D 1/02

(54) **FAHRZEUG MIT UMFELDÜBERWACHUNGSEINRICHTUNG**
VEHICLE WITH DEVICE FOR MONITORING THE VICINITY
VÉHICULE COMPRENANT UN DISPOSITIF DE SURVEILLANCE DE L'ENVIRONNEMENT

(30) Priorität: 12.09.2019 DE 102019213922
(43) Veröffentlichungstag der Anmeldung: 17.03.2021
(73) Patentinhaber: Jungheinrich Aktiengesellschaft, 22047 Hamburg (DE)
(72) Erfinder: Hämmerl, Robert, 85368 Moosburg (DE)
(74) Vertreter: Weickmann & Weickmann PartmbB

(56) Entgegenhaltungen:
- EP-A1- 2 428 862
- EP-A2- 1 842 825
- DE-U1-202013 004 209
- DE-U1-202016 003 096
- JP-U- H0 683 509
- US-A1- 2018 072 212

## Beschreibung

Die Erfindung betrifft ein Fahrzeug, insbesondere Flurförderzeug, mit einem Fahrzeugboden, drei Fahrzeugrädern und einer Umfeldüberwachungseinrichtung mit mehreren Umfeldsensoreinheiten, insbesondere Laserscannern, deren jede einen zusammenhängenden Überwachungswinkelbereich in einer horizontalen Ebene aufweist.

Ein Fahrzeug mit einem Fahrzeugboden und drei Rädern ist beispielsweise aus der EP 1 842 825 A2 bekannt.

Es sind Fahrzeuge dieser Art z.B. als automatisierte Flurförderzeuge (automatic guided vehicles) mit Umfeldüberwachungseinrichtungen bekannt. Bei den Umfeldüberwachungseinrichtungen handelt es sich um Sicherheitsvorkehrungen zur Vermeidung von Kollisionen des Fahrzeugs mit Objekten in einem Umkreis von einigen Metern um das Fahrzeug herum. Die bekannten Flurförderzeuge weisen als Umfeldsensoreinheiten Laserscanner auf, welche diagonal versetzt an Seitenecken des Flurförderzeugs im Wesentlichen außerhalb der Draufsichtskontur des Fahrzeugbodens bzw. Fahrzeugrahmens angeordnet sind und insgesamt eine 360°-Rundumüberwachung um das Flurförderzeug ermöglichen. Die Umfeldsensoren sind so abstehend am Flurförderzeug angebracht, dass sie die Länge und die Breite des Flurförderzeugs in ungünstiger Weise vergrößern. Sobald von der Umfeldüberwachungseinrichtung ein Gegenstand in Bodennähe in dem Rundumüberwachungskreis detektiert wird, stoppt das Fahrzeug und/oder gibt ein Warnsignal aus.

Für Beispiele eines Vorsehens von Umfeldüberwachungseinrichtungen in Fahrzeugen sei auf die JP H06 83509 U, die US 2018/072212 A1, die DE 20 2016 003096 U1, die DE 20 2013 004 209 U1 und die EP 2 428 862 A1 verwiesen.

Aufgabe der vorliegenden Erfindung ist es, ein Fahrzeug der gattungsgemäßen Art bereitzustellen, welches eine geringe Anzahl an Umfeldsensoreinheiten zur Realisierung einer 360°-Rundumüberwachung um das Fahrzeug herum aufweist, wobei die Umfeldsensoreinheiten geschützt untergebracht sind und nicht zur Verlängerung oder Verbreiterung des Fahrzeugs in dessen Draufsichtskontur führen.

Ausgehend von einem Fahrzeug mit den Merkmalen des Oberbegriffs des Anspruchs 1 wird zur Lösung dieser Aufgabe vorgeschlagen, dass die Umfeldüberwachungseinrichtung zwei Umfeldsensoreinheiten aufweist, die unterhalb des Fahrzeugbodens innerhalb der Draufsichtskontur des Fahrzeugbodens derart angeordnet sind, dass ihre Überwachungswinkelbereiche einander teilweise überlappen und einen gemeinsamen horizontalen Scanbereich definieren, in welchem Lücken bzw. Abschattungen im Überwachungswinkelbereich einer jeweiligen Umfeldsensoreinheit innerhalb der Draufsichtskontur des Fahrzeugs durch den Überwachungswinkelbereich der anderen Umfeldsensoreinheit erfasst werden, so dass die Umfeldüberwachungseinrichtung eine 360°-Rundumüberwachung um das Fahrzeug herum bietet.

Das so gestaltete Fahrzeug kommt mit lediglich zwei Umfeldsensoreinheiten der Umfeldüberwachungseinrichtung vorzugsweise in Form von Laserscannern aus, um eine vollständige Rundumüberwachung des Fahrzeugs zu realisieren, wobei diese Umfeldsensoreinheiten so unter dem Fahrzeug vorgesehen sind, dass sie nicht außerhalb der Draufsichtskontur des Fahrzeugbodens bzw. Fahrzeugrahmens Platz beanspruchen.

Vorzugsweise handelt es sich bei dem Fahrzeug um ein automatisiertes Flurförderzeug, also ein selbstfahrendes bzw. fahrerloses Flurförderzeug, dessen Bewegungsmöglichkeiten auch von Signalen der Umfeldüberwachungseinrichtung beeinflusst werden. Stellt die Umfeldüberwachungseinrichtung eine Person oder einen Gegenstand insbesondere in Fahrtrichtung vor dem Fahrzeug fest, so löst dies vorzugsweise einen Stopp des Fahrzeugs und gegebenenfalls ein Warnsignal des Fahrzeugs aus.

Gemäß einer bevorzugten Ausführungsform der Erfindung sind zwei der Räder mit Abstand voneinander auf einer ersten gemeinsamen Geraden angeordnet und das dritte Rad mit Abstand zur ersten Geraden auf einer zweiten Geraden angeordnet, die senkrecht zur ersten Geraden verläuft und diese insbesondere mittig zwischen den beiden auf der ersten Geraden angeordneten Räder kreuzt.

Bei den beiden mit Abstand voneinander auf einer gemeinsamen Geraden angeordneten Rädern handelt es sich vorzugsweise um nicht gelenkte Laststützräder, insbesondere Vorderräder, wohingegen das dritte Rad ein lenkbares Antriebsrad, insbesondere Hinterrad, ist.

Gemäß einer besonders bevorzugten Ausführungsform der Erfindung sind die beiden Umfeldsensoreinheiten gemeinsam mit dem dritten Rad auf einer parallel zur ersten Geraden verlaufenden Geraden in geringem Abstand zu dem dritten Rad angeordnet, wobei das dritte Rad zwischen den Umfeldsensoreinheiten positioniert ist. Eine solche Anordnung der Umfeldsensoreinheiten in unmittelbarer Nähe des dritten Rades bietet guten Schutz für die Umfeldsensoreinheiten auch bei Rampenübergängen.

Vorzugsweise weist jede Überwachungssensoreinheit einen zusammenhängenden Überwachungswinkelbereich von 255° bis 280° und insbesondere von etwa 270° auf. Derartige Laserscanner mit einem Überwachungswinkelbereich von etwa 270° sind als solche im Fachhandel erhältlich und haben sich als gut funktionstauglich für die hier beschriebene Anwendung erwiesen. Weiterbildungen der Erfindung sind ferner in den Ansprüchen 9 und 10 angegeben.

Die Überwachungswinkelbereiche der Umfeldsensoreinheiten sind vorzugsweise so ausgerichtet, dass das dritte Fahrzeugrad zwischen Anfang und Ende des jeweiligen Überwachungswinkelbereichs und somit in einem Blindwinkelbereich der jeweiligen Umfeldsensoreinheit liegt.

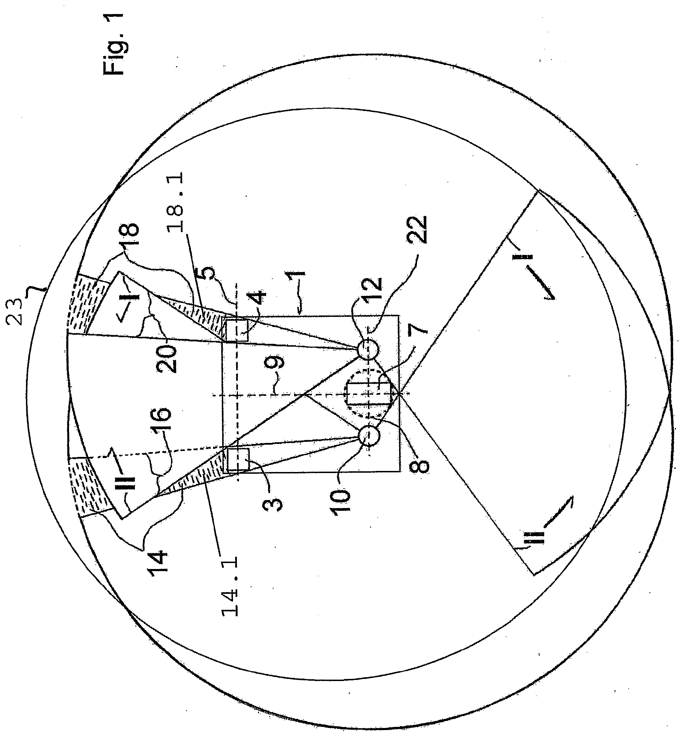

Ein Ausführungsbeispiel der Erfindung ist nachstehend unter Bezugnahme auf die Fig. 1 erläutert. Fig. 1 stellt eine schematische Darstellung der Funktionsweise eines Flurförderzeugs mit einer Umfeldüberwachungseinrichtung gemäß der Erfindung dar. Es handelt sich bei Fig. 1 um eine vereinfachte schematische Draufsichtskonturendarstellung.

Mit 1 ist in Fig. 1 der im Beispielsfall rechteckige Umriss eines Flurförderzeugs (ohne Lasttragvorrichtung) in Draufsicht (Draufsichtskontur) gekennzeichnet. Dabei bezeichnet 3 bzw. 4 die Lage zweier nichtgelenkter Laststützräder (Vorderräder), die mit Abstand voneinander auf einer ersten gemeinsamen Geraden 5 nahe dem vorderen Rand der gezeigten Kontur des Flurförderzeugs unten am Flurförderzeug angeordnet sind. Diese Laststützräder befinden sind in der Regel im Bereich des Lastteils des Flurförderzeugs, insbesondere jeweils im vorderen Bereich eines Lastarms. Ein motorisch angetriebenes und lenkbares Rad 7 (Hinterrad) ist mit Abstand zur ersten Geraden 5 auf einer zweiten Geraden 9 angeordnet, die senkrecht zur ersten Geraden 5 verläuft und diese mittig zwischen den beiden auf der ersten Geraden 5 angeordneten Rädern 3, 4 kreuzt. Dieses gelenkte Antriebsrad ist üblicherweise im Bereich des Antriebsteils des Flurförderzeugs angeordnet. Mit den drei unten am Flurförderzeug angeordneten Rädern 3,4 und 7 ist dieses am Boden abgestützt. Mit 8 ist in der Fig. 1 die Drehkontur bzw. Lenkkontur des Antriebsrades 7 bezeichnet.

Beiderseits des Antriebsrades 7 ist in dessen Nähe ein jeweiliger Laserscanner 10 bzw. 12 als Umfeldsensoreinheit unterhalb des Bodens des Flurförderzeugs innerhalb der Draufsichtskontur 1 angeordnet. Jeder der Laserscanner 10 bzw. 12 hat unterhalb des Flurförderzeugbodens einen horizontalen Überwachungswinkelbereich von etwa 270°. Die Laserscanner sollten möglichst tief angeordnet sein, um eine weitestgehend durchgängige Scanebene zu erhalten, so dass auch tief liegende Objekte, wie etwa abgesenkte Fördergutträgergabelzinken anderer Flurförderzeuge in den Überwachungswinkelbereichen I-I und II-II erfasst werden können.

Die Winkelränder des Überwachungswinkelbereichs des Laserscanners 10 sind in der Fig. 1 mit I gekennzeichnet, wohingegen die Winkelränder des Überwachungswinkelbereichs des Laserscanners 12 in Fig. 1 mit II gekennzeichnet sind.

Aus der Fig. 1 ist gut zu erkennen, dass die Überwachungswinkelbereiche I-I und II-II in einigen Bereichen des Umfeldes des Flurförderzeugs einander überlappen, um auf diese Weise auch die durch die Räder 3, 4, 7 verursachten Abschattungen des Überwachungswinkelbereichs eines der Laserscanner 10 bzw. 12 durch den Überwachungswinkelbereich des jeweiligen anderen Laserscanners 12 bzw. 10 zu erfassen und so eine 360°-Rundumüberwachung des Umfeldes des Flurförderzeugs ermöglichen.

So ist z. B. ein Bereich der Abschattung des Überwachungswinkelbereichs I, I des Laserscanners 10 durch das Vorderrad 3 in der Fig. 1 mit 14 bezeichnet, wobei dieser Abschattungsbereich 14 bei 16 von dem Überwachungswinkelbereich II, II des Laserscanners 12 überlagert wird. In entsprechender Weise wird der Abschattungsbereich 18 des Laserscanners 12 durch das Vorderrad 4 bei 20 von dem Überwachungswinkelbereich I-I überlagert, so dass das Umfeld des Flurförderzeugs auch in den beiden Abschattungsbereichen 14,18 mittels der Umfeldüberwachungseinrichtung überwacht wird. Im Bereich 14.1 und 18.1 von den Vorderrädern 3 und4 ist aufgrund des Schattenwurfes der Räder keine Überwachung möglich. Es ist allerdings vorgesehen, dass das Fahrzeug gestoppt wird, bevor ein Gegenstand in den nicht überwachten Schattenbereich 14.1 und 18.1 eintritt. Zu diesem Zweck ist ein Schutzfeld 23 vorgesehen, wobei das Schutzfeld sich über die Schattenbereiche 14.1 und 18.1 nach außen erstreckt. Die Überwachungsreichweite von jedem Laserscanner 10 bzw. 12 beträgt z.B. 5m.

Die beiden Laserscanner 10 und 12 sind in der Draufsicht betrachtet auf einer gemeinsamen Linie 22 mit dem angetriebenen Hinterrad 7 in dessen Nähe angeordnet. Bei der Linie 22 kann es sich um eine gemeinsame Gerade handeln. Aufgrund einer derartigen Anordnung der Laserscanner 10 und 12 in Nähe des Antriebsrades 7 sind die Laserscanner, obwohl sie weit abgesenkt sind, gut geschützt, etwa auch bei Fahrt des Flurförderzeugs über Rampenübergänge.

Der jeweilige 90°-Blindwinkelbereich der Laserscanner 10 bzw. 12 ist so angeordnet, dass sich darin das angetriebene Hinterrad 7 befindet, wobei der Blindwinkelbereich des Laserscanners 10 durch den Überwachungswinkelbereich II-II des Laserscanners 12 abgedeckt ist und der Blindwinkelbereich des Laserscanners 12 durch den Überwachungswinkelbereich I-I des Laserscanners 10 abgedeckt ist.

## Patentansprüche

1. Fahrzeug mit einem Fahrzeugboden und drei Fahrzeugrädern (3, 4, 7),
**gekennzeichnet durch** eine Umfeldüberwachungseinrichtung mit mehreren Umfeldsensoreinheiten (10, 12), insbesondere Laserscannern, deren jede einen zusammenhängenden Überwachungswinkelbereich (I-I, II-II) in einer horizontalen Ebene unterhalb des Fahrzeugbodens aufweist,
wobei die Umfeldüberwachungseinrichtung zwei Umfeldsensoreinheiten (10, 12) aufweist, die unterhalb des Fahrzeugbodens innerhalb der Draufsichtskontur (1) des Fahrzeugs derart angeordnet sind, dass ihre Überwachungswinkelbereiche (I-I, II-II) einander teilweise überlappen und einen gemeinsamen horizontalen Scanbereich definieren, in welchem Lücken bzw. durch die drei Fahrzeugräder (3, 4, 7) verursachte Abschattungen (14, 18) im Überwachungswinkelbereich einer jeweiligen Umfeldsensoreinheit innerhalb der Draufsichtskontur des Fahrzeugs durch den Überwachungswinkelbereich der anderen Umfeldsensoreinheit erfasst werden, so dass die Umfeldüberwachungseinrichtung eine 360°-Rundumüberwachung um das Fahrzeug herum bietet.

2. Fahrzeug nach Anspruch 1, **dadurch gekennzeichnet, dass** es sich bei dem Fahrzeug um ein automatisiertes Flurförderzeug handelt.

3. Fahrzeug nach Anspruch 1, **dadurch gekennzeichnet, dass** zwei der Räder (3, 4) mit Abstand voneinander auf einer ersten gemeinsamen Geraden (5) angeordnet sind und das dritte Rad (7) mit Abstand zur ersten Geraden auf einer zweiten Geraden (9) angeordnet ist, die senkrecht zur ersten Geraden verläuft und diese insbesondere mittig zwischen den beiden auf der ersten Geraden angeordneten Rädern (3, 4) kreuzt,

4. Fahrzeug nach Anspruch 3, **dadurch gekennzeichnet, dass** es sich bei den beiden mit Abstand voneinander auf einer gemeinsamen Geraden angeordneten Rädern (3, 4) um nichtgelenkte Laststützräder handelt, wohingegen das dritte Rad (7) ein lenkbares Antriebsrad ist.

5. Fahrzeug nach Anspruch 3 oder Anspruch 4, **dadurch gekennzeichnet, dass** in Draufsicht die beiden Umfeldsensoreinheiten (10, 12) gemeinsam mit dem dritten Rad (7) auf einer parallel zur ersten Geraden (5) verlaufenden Geraden (22) in geringem Abstand zu dem dritten Rad (7) angeordnet sind, wobei das dritte Rad (7) zwischen den Umfeldsensoreinheiten (10, 12) positioniert ist.

6. Fahrzeug nach wenigstens einem der vorher gehenden Ansprüche, **dadurch gekennzeichnet, dass** jede Überwachungssensoreinheit (10, 12) einen Überwachungswinkelbereich (I-I, II-II) im Bereich von 255° bis 280°, und insbesondere von etwa 270° aufweist.

7. Fahrzeug nach Anspruch 5 und Anspruch 6, **dadurch gekennzeichnet**, die Überwachungswinkelbereiche (I-I, II-II) der Umfeldsensoreinheiten (10, 12) so ausgerichtet sind, dass das dritte Fahrzeugrad (7) zwischen Anfang und Ende des jeweiligen Überwachungswinkelbereichs (I-I, II-II) und somit in einem Blindwinkelbereich der jeweiligen Umweltsensoreinheit (10, 12) liegt.

8. Fahrzeug nach wenigstens einem der vorher gehenden Ansprüche, **dadurch gekennzeichnet, dass** die Umfeldsensoreinheiten (10, 12) eine Reichweite von mindestens 3m, insbesondere von etwa 5m aufweisen.

9. Fahrzeug, insbesondere Flurförderzeug, nach wenigstens einem der vorhergehenden Ansprüche, **dadurch gekennzeichnet, dass** es heb- und senkbare Lastaufnahmemittel aufweist, und die Anordnung so getroffen ist, dass bei angehobenen Lastaufnahmemitteln Abschattungen im Überwachungswinkelbereich der Umfeldsensoreinheiten ausschließlich durch die Fahrzeugräder hervorgerufen werden.

10. Fahrzeug nach einem der vorhergehenden Ansprüche, **dadurch gekennzeichnet, dass** in der Umfeldüberwachungseinrichtung ein Schutzfeld definiert ist, so dass bei einem Eintritt von Objekten in das Schutzfeld das Fahrzeug gestoppt wird und dass das Schutzfeld sich über den Bereich der nicht überwachbaren Schattenbereiche (18.1, 14.1) hinaus von dem Fahrzeug weg nach außen erstreckt.

## Claims

1. Vehicle, comprising a vehicle floor and three vehicle wheels (3, 4, 7),
**characterised by** a surroundings monitoring device comprising a plurality of surroundings sensor units (10, 12), in particular laser scanners, each of which has a continuous monitoring angle range (I-I, II-II) in a horizontal plane below the vehicle floor, the surroundings monitoring device comprising two surroundings sensor units (10, 12) which are arranged under the vehicle floor, within the plan view contour (1) of the vehicle, such that the monitoring angle ranges (I-I, II-II) thereof overlap one another in part and define a common horizontal scanning region, in which gaps or shadowing (14, 18), caused by the three vehicle wheels (3, 4, 7), in the monitoring angle range of a particular surroundings sensor unit, within the plan view of the vehicle, are captured by the monitoring angle range of the other surroundings sensor unit, such that the surroundings monitoring device offers 360° all-around monitoring around the vehicle.

2. Vehicle according to claim 1, **characterised in that** the vehicle is an automated industrial truck.

3. Vehicle according to claim 1, **characterised in that** two of the wheels (3, 4) are arranged at a mutual spacing on a first common straight line (5), and the third wheel (7) is arranged on a second straight line (9) so as to be at a spacing from the first straight line, which second straight line extends perpendicularly to the first straight line and intersects therewith, in particular centrally between the two wheels (3, 4) arranged on the first straight line.

4. Vehicle according to claim 3, **characterised in that** the two wheels (3, 4) that are arranged on a common straight line, so as to be mutually spaced, are non-steered load support wheels, whereas the third wheel (7) is a steerable drive wheel.

5. Vehicle according to either claim 3 or claim 4, **characterised in that**, in plan view, the two surroundings sensor units (10, 12) together with the third wheel (7) are arranged on a straight line (22), extending in parallel with the first straight line (5), so as to be at a small spacing from the third wheel (7), the third wheel (7) being positioned between the surroundings sensor units (10, 12).

6. Vehicle according to at least one of the preceding claims, **characterised in that** each monitoring sensor unit (10, 12) has a continuous monitoring angle range (I-I, II-II) in the range of from 255° to 280°, and in particular of approximately 270°.

7. Vehicle according to claim 5 and claim 6, **characterised in that** the monitoring angle ranges (I-I, II-II) of the surroundings sensor units (10, 12) are configured such that the third vehicle wheel (7) is located between the start and end of the particular monitoring angle range (I-I, II-II), and thus in a blind angle range of the particular surroundings sensor unit (10, 12).

8. Vehicle according to at least one of the preceding claims, **characterised in that** the surroundings sensor units (10, 12) have a range of at least 3 m, in particular of approximately 5 m.

9. Vehicle, in particular industrial truck, according to at least one of the preceding claims, **characterised in that** it comprises load receiving means, which can be raised and lowered, and the arrangement is made such that, when the load receiving means are raised, shadowing is brought about, in the monitoring angle range of the surroundings sensor units, exclusively by the vehicle wheels.

10. Vehicle according to any of the preceding claims, **characterised in that** a protective field is defined in the surroundings monitoring device such that the vehicle is stopped in the event of objects entering the protective field, and **in that** the protective field extends outwards, away from the vehicle, beyond the region of the shadow regions (18.1, 14.1) that cannot be monitored.

## Revendications

1. Véhicule avec un plancher du véhicule et trois roues de véhicule (3, 4, 7), **caractérisé par** un dispositif de surveillance de l'environnement avec plusieurs unités de capteurs d'environnement (10, 12), en particulier des scanners laser, dont chacun présente une plage angulaire de surveillance continue (I-I, II-II) dans un plan horizontal sous le plancher du véhicule,
dans lequel le dispositif de surveillance de l'environnement présente deux unités de capteurs d'environnement (10, 12) qui sont disposées sous le plancher du véhicule à l'intérieur du contour vu de dessus (1) du véhicule de telle sorte que leurs plages angulaires de surveillance (I-I, II-II) se chevauchent partiellement et définissent une plage de balayage horizontale commune dans laquelle des vides ou des ombres (14, 18) causées par les trois roues du véhicule (3, 4, 7) dans la plage angulaire de surveillance d'une unité de capteurs d'environnement respective à l'intérieur du contour vu de dessus du véhicule sont détectées par la plage angulaire de surveillance de l'autre unité de capteurs d'environnement, de sorte que le dispositif de surveillance de l'environnement fournit une surveillance périphérique à 360° autour du véhicule.

2. Véhicule selon la revendication 1, **caractérisé en ce que** le véhicule est un chariot de manutention automatisé.

3. Véhicule selon la revendication 1, **caractérisé en ce que** deux des roues (3, 4) sont disposées à distance l'une de l'autre sur une première ligne droite commune (5) et la troisième roue (7) est disposée à distance de la première ligne droite sur une deuxième ligne droite (9) qui est perpendiculaire à la première ligne droite et la croise, en particulier au centre entre les deux roues (3, 4) disposées sur la première ligne droite.

4. Véhicule selon la revendication 3, **caractérisé en ce que** les deux roues (3, 4) disposées à distance l'une de l'autre sur une ligne droite commune sont des roues de support de charge non directrices, tandis que la troisième roue (7) est une roue motrice directrice.

5. Véhicule selon la revendication 3 ou la revendication 4, **caractérisé en ce que**, vues de dessus, les deux unités de capteurs d'environnement (10, 12) sont disposées avec la troisième roue (7) sur une ligne droite (22) parallèle à la première ligne droite (5) à une faible distance de la troisième roue (7), la troisième roue (7) étant positionnée entre les unités de capteurs d'environnement (10, 12).

6. Véhicule selon au moins l'une des revendications précédentes, **caractérisé en ce que** chaque unité de capteurs de surveillance (10, 12) présente une plage angulaire de surveillance (I-I, II-II) comprise entre 255° et 280°, et en particulier d'environ 270°.

7. Véhicule selon la revendication 5 et la revendication 6, **caractérisé en ce que** les plages angulaires de surveillance (I-I, II-II) des unités de capteurs d'environnement (10, 12) sont orientées de telle sorte que la troisième roue de véhicule (7) se trouve entre le début et la fin de la plage angulaire de surveillance respective (I-I, II-II) et donc dans une plage angulaire aveugle de l'unité de capteurs d'environnement respective (10, 12).

8. Véhicule selon au moins l'une des revendications précédentes, **caractérisé en ce que** les unités de capteurs d'environnement (10, 12) ont une portée d'au moins 3 m, en particulier d'environ 5 m.

9. Véhicule, en particulier chariot de manutention, selon au moins l'une des revendications précédentes, **caractérisé en ce qu'**il présente des moyens de réception de charge pouvant être relevés et abaissés, et l'agencement est tel que, lorsque les moyens de réception de charge sont relevés, des ombres dans la plage angulaire de surveillance des unités de capteurs d'environnement sont provoquées exclusivement par les roues du véhicule.

10. Véhicule selon l'une des revendications précédentes, **caractérisé en ce qu'**un champ de protection est défini dans le dispositif de surveillance de l'environnement de sorte que le véhicule est arrêté si des objets entrent dans le champ de protection et que le champ de protection s'étend vers l'extérieur en s'éloignant du véhicule au-delà de la zone des zones d'ombre (18.1, 14.1) qui ne peuvent pas être surveillées.
